# EUROPEAN PATENT SPECIFICATION

(11) **EP 3 715 325 B1**
(45) Date of publication and mention of the grant of the patent: **31.05.2023**
(21) Application number: 18878111.6
(22) Date of filing: 16.11.2018
(51) Int. Cl.: C01B 33/107, F16K 1/24, F16K 31/44, F16K 5/06, F16K 5/20

(54) **METHOD FOR PRODUCING TRICHLOROSILANE AND DEVICE FOR PRODUCING TRICHLOROSILANE**
VERFAHREN ZUR HERSTELLUNG VON TRICHLORSILAN UND VORRICHTUNG ZUR HERSTELLUNG VON TRICHLORSILAN
MÉTHODE DE PRODUCTION DE TRICHLOROSILANE ET DISPOSITIF DE PRODUCTION DE TRICHLOROSILANE

(30) Priority: 20.11.2017 JP 2017223149
(43) Date of publication of application: 30.09.2020
(73) Proprietor: Tokuyama Corporation, Shunan-shi, Yamaguchi 745-8648 (JP)
(72) Inventor: HIROTA, Kenji, Shunan-shi Yamaguchi 745-8648 (JP); OGIHARA, Katsuya, Shunan-shi Yamaguchi 745-8648 (JP)
(74) Representative: Bittner, Thomas L.
(86) International application number: PCT/JP2018/042556
(87) International publication number: WO 2019/098344

(56) References cited:
- EP-A2- 2 210 661
- WO-A1-2011/009390
- WO-A1-2012/174228
- CN-A- 106 276 919
- CN-B- 103 408 022
- CN-U- 202 659 960
- JP-A- H08 105 552
- JP-A- 2014 523 842

## Description

### Technical Field

The present invention relates to a method for producing trichlorosilane and an apparatus for producing trichlorosilane.

### Background Art

Highly pure trichlorosilane (TCS, SiHCl3) is used to produce polycrystalline silicon which is used as materials for semiconductors and solar cells. Trichlorosilane is obtained through, for example, the following reaction pathway. First, metallurgical grade silicon powder (Si) and hydrogen chloride (HCl) are reacted with each other. By so doing, trichlorosilane is produced as a result of a main reaction shown by Formula (1), whereas tetrachlorosilane (STC, SiCl4) is produced as a result of a side reaction shown by Formula (2). Tetrachlorosilane is recovered and then reused, so that the tetrachlorosilane is converted into trichlorosilane as shown by Formula (3). Alternatively, in some cases, trichlorosilane is produced through a reaction shown by Formula (3) without use of hydrogen chloride.

Si+3HCl -> SiHCl3+H2 ... (1)

Si+4HCl -> SiCl4+2H2 ... (2)

3SiCl4+2H2+Si -> 4SiHCl3 ... (3)

The reaction product collected from a reactor (in which the above reactions take place) contains chlorosilane compounds containing trichlorosilane and the like, low-boiling silane, and tetrachlorosilane. Trichlorosilane is produced in a system including a pipe through which metallurgical grade silicon powder flows, the pipe being provided with a valve. The document JP 2009-120468 A, for example, discloses metallurgical grade silicon powder being introduced into an introduction pipe through a valve. A similar process is disclosed in EP 2 210 661 A2.

The document WO 2012 1 174228 A1 relates to a dome valve which selectively dispenses a silicon product from a chamber of a vessel. The dome valve comprises a valve body defining a pass-through channel in communication with the chamber of the vessel to allow the silicon product to exit the vessel. The dome valve also comprises a valve seat defining an opening through which the silicon product enters the pass-through channel. The dome valve further comprises a domed body having a semi-hemispherical configuration. The domed body has a sealing surface. The domed body is rotatable between a closed position and an open position for allowing the selective dispensing of the silicon product from the vessel.

### Summary of Invention

### Technical Problem

The above conventional technique unfortunately involves the following issue: In a case where metallurgical grade silicon powder is present between a valve body and valve seat of a valve provided for a pipe through which metallurgical grade silicon powder flows, the valve seat becomes damaged easily, and the valve suffers from an internal leak easily as a result. Specifically, when the valve body is rotated, metallurgical grade silicon powder may become present between the valve body and a valve seat, possibly damaging the valve seat. A damaged valve seat tends to cause an internal leak.

An aspect of the present invention has an object to prevent a valve seat from becoming damaged by metallurgical grade silicon powder and thereby prevent an internal leak.

### Solution to Problem

In order to attain the above object, a method for producing trichlorosilane according to the independent claim 1 as well as an apparatus for producing trichlorosilane according to the independent claim 7 are provided.

### Advantageous Effects of Invention

An aspect of the present invention makes it possible to prevent a valve seat from becoming damaged by metallurgical grade silicon powder and thereby prevent an internal leak.

### Brief Description of Drawings

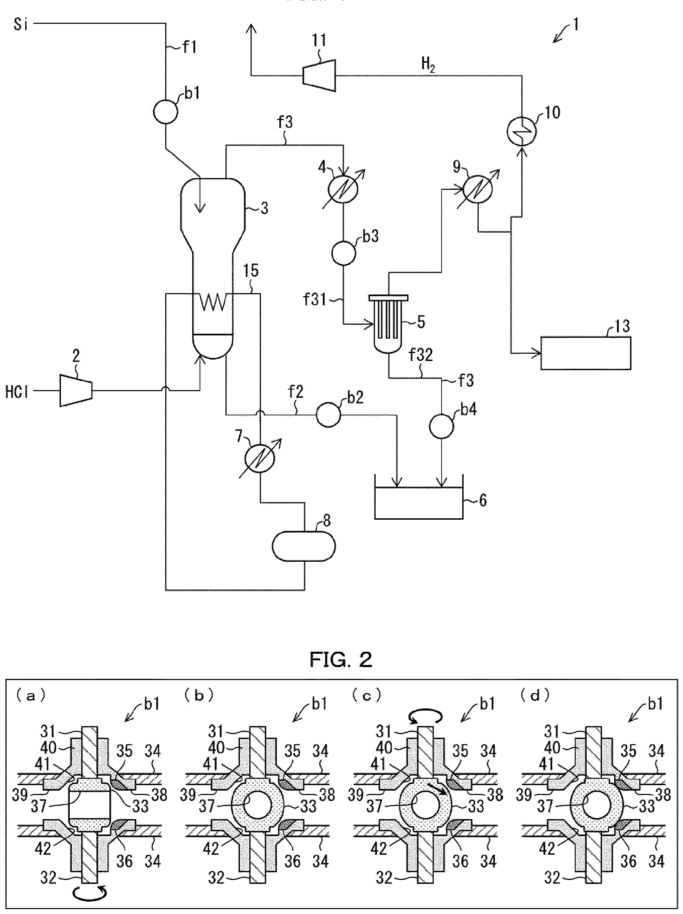

- Fig. 1: is a diagram schematically illustrating an example of how a production apparatus in accordance with Embodiment 1 of the present invention is configured.
- (a) to (d) of Fig.: 2 are each a diagram illustrating how a non-sliding valve included in the production apparatus illustrated in Fig. 1 operates in a case where the non-sliding valve becomes closed.
- (a) to (d) of Fig.: 3 are each a diagram illustrating how a non-sliding valve included in the production apparatus illustrated in Fig. 1 operates in a case where the non-sliding valve becomes open.

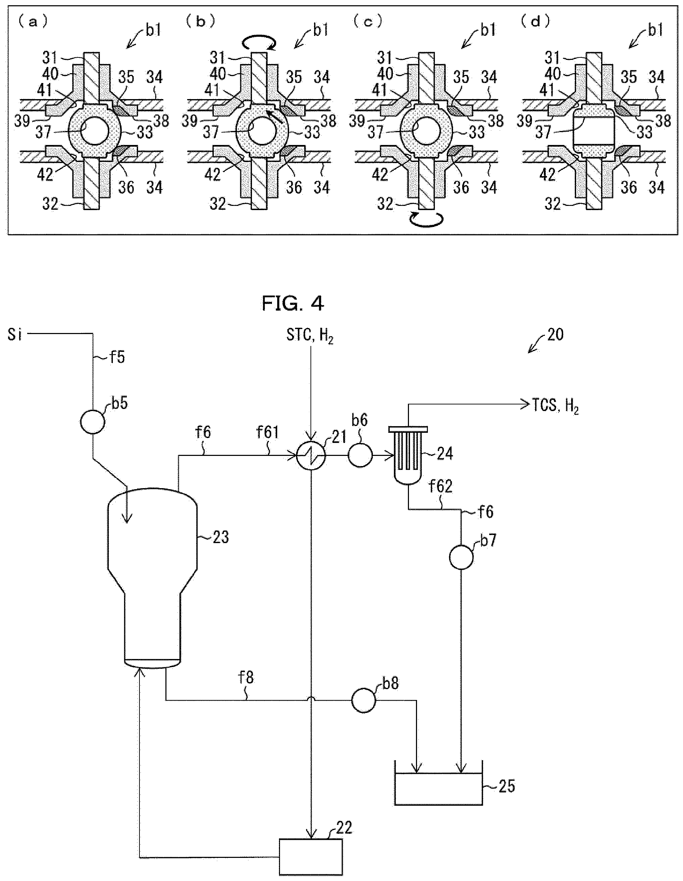

- Fig. 4: is a diagram schematically illustrating an example of how a production apparatus in accordance with Embodiment 2 of the present invention is configured.

### Description of Embodiments

### Embodiment 1

### (Configuration of production apparatus 1)

Fig. 1 is a diagram schematically illustrating an example of how a production apparatus 1 in accordance with Embodiment 1 of the present invention is configured. The present specification describes the production apparatus 1 as any apparatus for producing trichlorosilane with use of metallurgical grade silicon powder. The production apparatus 1 is, for example, a fluidized-bed reactor. The use of a fluidized-bed reactor makes it possible to continuously supply metallurgical grade silicon powder and hydrogen chloride gas and thereby continuously synthesize trichlorosilane. The reaction between metallurgical grade silicon powder and hydrogen chloride gas involves using a large amount of metallurgical grade silicon. This leads to metallurgical grade silicon powder becoming trapped in a valve provided on a channel through which metallurgical grade silicon powder flows, thereby tending to damage a valve seat. In view of that, a non-sliding valve is provided on a channel through which metallurgical grade silicon powder flows. This allows an aspect of the present invention to particularly significantly produce an effect of reducing the above damage during reaction between metallurgical grade silicon powder and hydrogen chloride gas.

Note that any numerical range expressed as "A to B", in this specification, means "not less than A and not more than B (between A and B inclusive)", unless otherwise specified. In the following description, an apparatus to produce trichlorosilane by allowing metallurgical grade silicon powder and a hydrogen chloride gas to react with each other is employed as an example, as illustrated in Fig. 1. Note, however, that an apparatus to produce trichlorosilane by using metallurgical grade silicon powder may alternatively be employed.

As used herein, the term "metallurgical grade silicon powder" refers to a solid substance that contains elemental silicon in metal form, such as metallurgical metal silicon, ferrosilicon, or polysilicon. Any of known such materials may be used without any limitation. These kinds of metallurgical grade silicon powder may contain some impurity(impurities) such as an iron compound. The constituents and amounts of such impurities are not particularly limited. Usually, the metallurgical grade silicon powder is used in the form of fine powder having an average particle diameter of about 150 to 350 µm.

The production apparatus 1, as illustrated in Fig. 1, includes compressors 2 and 11, a reaction vessel 3, coolers 4, 7, and 9, a filter 5, a container tank 6, a heat medium drum 8, a condenser 10, a distillation column 13, and non-sliding valves b1 to b4. These constituent elements of the production apparatus 1 are connected with one another with use of pipes.

The production apparatus 1 further includes pipes through which metallurgical grade silicon powder flows, for production of trichlorosilane. The pipes through which metallurgical grade silicon powder flows are each a pipe for a channel through which metallurgical grade silicon powder flows in a trichlorosilane production system. The pipe for a channel through which metallurgical grade silicon powder flows is, for example, a pipe for an entry channel f1, an exit channel f2, a discharge channel f31, or a discharge channel f32 (each of which will be described later). The trichlorosilane production system refers to an entire production apparatus for producing trichlorosilane, and refers to the entire production apparatus 1, for example.

A method for producing trichlorosilane with use of the production apparatus 1 involves use of the non-sliding valves b1 to b4 to each open and close a channel through which metallurgical grade silicon powder flows in the trichlorosilane production system. A channel through which metallurgical grade silicon powder flows in a trichlorosilane production system is, for example, the entry channel f1, the exit channel f2, the discharge channel f31, or the discharge channel f32 (each of which will be described later).

The compressor 2 is provided for a pipe through which hydrogen chloride gas flows, and is configured to compress hydrogen chloride gas flowing through the pipe and supply hydrogen chloride gas to the reaction vessel 3. The reaction vessel 3 is configured to receive externally supplied metallurgical grade silicon powder and hydrogen chloride gas and cause metallurgical grade silicon powder and hydrogen chloride gas to react with each other for production of trichlorosilane.

The shape of the reaction vessel 3 (in other words, the shape of the side wall of the reaction vessel 3) is not particularly limited. For example, a portion, which surrounds a fluid bed (not shown), of the side wall of the reaction vessel 3 may be (i) shaped such that its cross section perpendicular to the height direction of the reaction vessel 3 is uniform in area (not shown) or may be (ii) tapered such that its cross section perpendicular to the height direction of the reaction vessel 3 increases in area in an upward direction (not shown). For example, the side wall may be tapered such that the tapered portion, whose cross section perpendicular to the height direction of the reaction vessel 3 increases in area in the upward direction, occupies a range from the gas feed opening to at least 80% of the distance from the gas feed opening to the top face of the fluid bed. The shape of the reaction vessel 3 is preferably a tapered shape, because this makes it possible to reduce the risk of erosion and to prevent local temperature increases.

The reaction vessel 3 receives externally supplied metallurgical grade silicon powder through a pipe for the entry channel f1 which pipe is provided with a non-sliding valve b1. The non-sliding valve b1, as illustrated in Fig. 2, includes stems 31 and 32, a valve body 33, valve seats 35 and 36, and a body section 40. The non-sliding valve b1 is configured to open and close the entry channel f1. The entry channel f1 is part of the channel through which metallurgical grade silicon powder flows in the trichlorosilane production system.

Metallurgical grade silicon powder has small particle diameters. Minimizing a sliding portion of a conventional valve will still let metallurgical grade silicon powder enter the sliding portion while the valve is sliding, causing a valve seat to be damaged by the metallurgical grade silicon powder. It is thus preferable to use a non-sliding valve b1, which has no sliding portion.

The above arrangement can reduce damage caused to the valve seats 35 and 36 by metallurgical grade silicon powder becoming trapped when the non-sliding valve b1 is closed on the entry channel f1, which is configured to guide metallurgical grade silicon powder into the reaction vessel 3. This allows the non-sliding valve b1 to be replaced less frequently, thereby allowing the replacement of the non-sliding valve b1 to be less expensive. Reaction between metallurgical grade silicon powder and hydrogen chloride gas for production of trichlorosilane, in particular, involves use of a large amount of metallurgical grade silicon. This means that the entry channel f1 is provided with a valve that is opened and closed frequently. In view of that, the non-sliding valve b1 is provided on the entry channel f1. This allows an aspect of the present invention to particularly significantly produce an effect of reducing damage to the valve seats 35 and 36 during reaction between metallurgical grade silicon powder and hydrogen chloride gas for production of trichlorosilane. A later description will deal in detail with how the non-sliding valve b1 is operated.

The production apparatus 1 includes a heat medium pipe 15 which extends through the reaction vessel 3 and through which a heat medium flows. The heat medium pipe 15 connects the cooler 7 and the heat medium drum 8 with each other. The cooler 7 is configured to lower the temperature of a heat medium flowing through the heat medium pipe 15. The heat medium drum 8 is configured to pool a heat medium.

Metallurgical grade silicon powder taken out from a lower portion of the reaction vessel 3 flows through a pipe for the exit channel f2 which pipe is provided with a non-sliding valve b2. The non-sliding valve b2 is configured to open and close the exit channel f2. The exit channel f2 is present between the reaction vessel 3 and the container tank 6, which is configured to contain metallurgical grade silicon powder taken out from a lower portion of the reaction vessel 3. The exit channel f2 is part of the channel through which metallurgical grade silicon powder flows in the trichlorosilane production system.

The above arrangement can reduce damage caused to the valve seats by metallurgical grade silicon powder becoming trapped when the non-sliding valve b2 is closed on the exit channel f2, through which metallurgical grade silicon powder taken out from a lower portion of the reaction vessel 3 flows. This allows the non-sliding valve b2 to be replaced less frequently, thereby allowing the replacement of the non-sliding valve b2 to be less expensive. Reaction between metallurgical grade silicon powder and hydrogen chloride gas for production of trichlorosilane, in particular, involves use of a large amount of metallurgical grade silicon. This means a large amount of metallurgical grade silicon powder taken out from a lower portion of the reaction vessel 3. In view of that, the non-sliding valve b2 is provided on the exit channel f2. This allows an aspect of the present invention to particularly significantly produce an effect of reducing damage to the valve seats during reaction between metallurgical grade silicon powder and hydrogen chloride gas for production of trichlorosilane.

Metallurgical grade silicon powder discharged from an upper portion of the reaction vessel 3 flows through the discharge channel f3, which extends from the reaction vessel 3 to the container tank 6. The discharge channel f3 includes a discharge channel f31, a pipe for which is provided with a non-sliding valve b3. The non-sliding valve b3 is configured to open and close the discharge channel f31. The non-sliding valve b3 is present between the cooler 4 and the filter 5. The discharge channel f31 is present between the reaction vessel 3 and the filter 5, which is configured to remove metallurgical grade silicon powder. The discharge channel f31 is part of the channel through which metallurgical grade silicon powder flows in the trichlorosilane production system. The non-sliding valve b3 may alternatively be present between the reaction vessel 3 and the cooler 4.

The above arrangement can reduce damage caused to the valve seats by metallurgical grade silicon powder becoming trapped when the non-sliding valve b3 is closed on the discharge channel f31, through which metallurgical grade silicon powder discharged from an upper portion of the reaction vessel 3 flows. This allows the non-sliding valve b3 to be replaced less frequently, thereby allowing the replacement of the non-sliding valve b3 to be less expensive.

The discharge channel f3 includes a discharge channel f32, through which metallurgical grade silicon powder removed with use of the filter 5 flows. A pipe for the discharge channel f32 is provided with a non-sliding valve b4. The non-sliding valve b4 is configured to open and close the discharge channel f32. The discharge channel f32 is present between the filter 5 and the container tank 6. The discharge channel f32 is part of the channel through which metallurgical grade silicon powder flows in the trichlorosilane production system.

The above arrangement can reduce damage caused to the valve seats by metallurgical grade silicon powder becoming trapped when the non-sliding valve b4 is closed on the discharge channel f32, through which metallurgical grade silicon powder flows. This allows the non-sliding valve b4 to be replaced less frequently, thereby allowing the replacement of the non-sliding valve b4 to be less expensive.

The discharge channel f31 lets hydrogen gas and trichlorosilane, tetrachlorosilane, and the like produced in the reaction vessel 3 flow therethrough. The pipe for the discharge channel f31 is provided with the cooler 4. The cooler 4 is configured to cool metallurgical grade silicon powder, hydrogen gas, trichlorosilane, tetrachlorosilane, and the like each flowing through the discharge channel f31.

The filter 5 is configured to filter out metallurgical grade silicon powder from among metallurgical grade silicon powder, hydrogen gas, trichlorosilane, tetrachlorosilane, and the like each cooled by the cooler 4. The filter 5 is configured to discharge metallurgical grade silicon powder that the filter 5 has removed to the container tank 6 and supply hydrogen gas, trichlorosilane, tetrachlorosilane, and the like to the cooler 9. The cooler 9 is configured to cool hydrogen gas, trichlorosilane, tetrachlorosilane, and the like with use of cooling water and supply the hydrogen gas, trichlorosilane, tetrachlorosilane, and the like that the cooler 9 has cooled to the condenser 10.

The condenser 10 is configured to cause gas-liquid separation of hydrogen gas, trichlorosilane, tetrachlorosilane, and the like to supply hydrogen gas to the compressor 11 and trichlorosilane, tetrachlorosilane, and the like to the distillation column 13. The distillation column 13 is configured to collect trichlorosilane and tetrachlorosilane by distillation.

### (How non-sliding valves operate)

(a) to (d) of Fig. 2 are each a diagram illustrating how the non-sliding valve b1 included in the production apparatus 1 operates in a case where the non-sliding valve b1 becomes closed. (a) to (d) of Fig. 3 are each a diagram illustrating how the non-sliding valve b1 included in the production apparatus 1 operates in a case where the non-sliding valve b1 becomes open.

A pipe 34 is a pipe for the entry channel f1, on which the non-sliding valve b1 is provided. (a) of Fig. 2 illustrates the non-sliding valve b1 as it is fully open. The valve body 33 has an opening section 37. Metallurgical grade silicon powder flowing through the pipe 34 passes through a space defined by the opening section 37. Metallurgical grade silicon powder flows in a direction from an entry section 38 of the non-sliding valve b1 to an exit section 39 thereof.

The valve body 33 has an upper end to which the stem 31 is attached and a lower end to which the stem 32 is attached. The body section 40 has an upper depressed portion 41 that shares a boundary with the entry section 38, at which boundary the valve seat 35 is provided. The body section 40 has a lower depressed portion 42 that shares a boundary with the entry section 38, at which boundary the valve seat 36 is provided. The valve seats 35 and 36 help keep the non-sliding valve b1 airtight. The valve seats 35 and 36 may each be made of, for example, carbon, Teflon (registered trademark), another resin material, or metal.

Rotating the stem 32 clockwise as viewed from below the non-sliding valve b1 as illustrated in (a) of Fig. 2 rotates the valve body 33 in a direction that causes the valve body 33 to become closed. The valve body 33, when rotated, does not come into contact with the valve seats 35 and 36. Rotating the stem 32 clockwise by 90 degrees closes the valve body 33 as illustrated in (b) of Fig. 2. The non-sliding valve b1 is, however, not fully closed. Simply rotating the stem 32 clockwise by 90 degrees does not bring the valve body 33 into contact with the valve seats 35 and 36.

After rotating the stem 32 clockwise by 90 degrees, rotating the stem 31 clockwise as viewed from above the non-sliding valve b1 as illustrated in (c) of Fig. 2 inclines the valve body 33 with the stem 31 as a fulcrum. This brings the valve body 33 into contact with the valve seats 35 and 36 as illustrated in (d) of Fig. 2. Finishing rotating the stem 31 clockwise results in the valve body 33 being pressed against the valve seats 35 and 36, thereby fully closing the non-sliding valve b1. This stops flow of metallurgical grade silicon powder inside the pipe 34.

(a) of Fig. 3 illustrates the non-sliding valve b1 as it is fully closed. Rotating the stem 31 counterclockwise as viewed from above the non-sliding valve b1 as illustrated in (b) of Fig. 3 moves the valve body 33 in a direction that causes the valve body 33 to become apart from the valve seats 35 and 36 with the stem 31 as a fulcrum. Finishing rotating the stem 31 counterclockwise completely separates the valve body 33 from the valve seats 35 and 36 as illustrated in (c) of Fig. 3.

After finishing rotating the stem 31 counterclockwise, rotating the stem 32 counterclockwise as viewed from below the non-sliding valve b1 as illustrated in (c) of Fig. 3 rotates the valve body 33 in a direction that causes the valve body 33 to become open. The valve body 33, when rotated, does not come into contact with the valve seats 35 and 36. Rotating the stem 32 counterclockwise by 90 degrees causes the non-sliding valve b1 to be fully open as illustrated in (d) of Fig. 3.

As described above, the non-sliding valve b1 includes a valve body 33 capable of being rotated without coming into contact with the valve seats 35 and 36. The non-sliding valve b1 is provided for the pipe 34 and is configured to open and close the channel of the pipe 34. This prevents the valve seats 35 and 36 of the non-sliding valve b1 from being damaged by metallurgical grade silicon powder, thereby preventing an internal leak. Further, since the non-sliding valve b1 includes a valve body 33 capable of being rotated without coming into contact with the valve seats 35 and 36, the non-sliding valve b1 has an improved durability. This facilitates continuous production of trichlorosilane.

The non-sliding valve b1 may be structured such that the valve body 33 and the valve seats 35 and 36 metal-touch each other. Metal touch refers to contact between things made of metal. In this case, the valve body 33 and the valve seats 35 and 36 are each made of metal. Rotating the stem 31 clockwise brings the valve body 33 and the valve seats 35 and 36 into contact with each other. When the non-sliding valve b1 is closed, the valve body 33 and the valve seats 35 and 36 metal-touch each other. This allows the non-sliding valve b1 to have a heat-resistant temperature exceeding 200°C and be used at a temperature exceeding 200°C. The non-sliding valves b2 to b4 and non-sliding valves b5 to b8 described later each have a structure similar to that of the non-sliding valve b1. The respective structures of the non-sliding valves b1 to b8 are not necessarily as described above. The non-sliding valves b1 to b8 may each be structured in any manner as long as the valve body and valve seats do not slide on each other.

### Embodiment 2

Fig. 4 is a diagram schematically illustrating an example of how a production apparatus 1 in accordance with Embodiment 2 of the present invention is configured. For convenience of description, any member of the present embodiment that is identical in function to a member described for the above embodiment is assigned the same reference sign, and is not described again here.

The production apparatus 1 includes, in addition to the members illustrated in Fig. 1, a heat exchanger 21, a heater 22, a second reaction vessel 23, a second filter 24, a second container tank 25, and non-sliding valves b5 to b8, each illustrated in Fig. 4. These constituent elements of the production apparatus 1 are connected with one another with use of pipes. For the present embodiment, the channel through which metallurgical grade silicon powder flows in a trichlorosilane production system includes a second entry channel f5, a second discharge channel f61, a second discharge channel f62, and a second exit channel f8.

The heat exchanger 21 receives hydrogen gas and tetrachlorosilane. The tetrachlorosilane may, for example, have been produced by a side reaction in the above-described reaction vessel 3. The heat exchanger 21 is configured to cause metallurgical grade silicon powder, hydrogen gas, and trichlorosilane supplied from the second reaction vessel 23 to exchange heat with hydrogen gas and tetrachlorosilane. The heat exchanger 21 supplies hydrogen gas and tetrachlorosilane to the heater 22.

The heater 22 is configured to heat tetrachlorosilane and hydrogen gas and supply tetrachlorosilane and hydrogen gas to the second reaction vessel 23. The second reaction vessel 23 is configured to contain tetrachlorosilane, hydrogen gas, and externally supplied metallurgical grade silicon powder and cause tetrachlorosilane, hydrogen gas, and metallurgical grade silicon powder to react with one another to produce trichlorosilane. The second reaction vessel 23 is configured to supply metallurgical grade silicon powder, hydrogen gas, trichlorosilane, and unreacted tetrachlorosilane to the second filter 24 via the heat exchanger 21.

The second filter 24 is configured to remove metallurgical grade silicon powder from among metallurgical grade silicon powder, hydrogen gas, trichlorosilane, and unreacted tetrachlorosilane supplied from the second reaction vessel 23 via the heat exchanger 21. The second filter 24 is configured to supply, to the second container tank 25, metallurgical grade silicon powder that the second filter 24 has removed.

The second reaction vessel 23 receives externally supplied metallurgical grade silicon powder through a pipe for the second entry channel f5 which pipe is provided with a non-sliding valve b5. The non-sliding valve b5 is configured to open and close the second entry channel f5. The second entry channel f5 is part of the channel through which metallurgical grade silicon powder flows in the trichlorosilane production system. The above arrangement can reduce damage caused to the valve seats by metallurgical grade silicon powder becoming trapped when the non-sliding valve b5 is closed on the second entry channel f5, which is configured to guide metallurgical grade silicon powder into the second reaction vessel 23. This allows the non-sliding valve b5 to be replaced less frequently, thereby allowing the replacement of the non-sliding valve b5 to be less expensive.

Metallurgical grade silicon powder discharged from second reaction vessel 23 flows through the second discharge channel f6, which extends from the second reaction vessel 23 to the second container tank 25. The second discharge channel f6 includes a second discharge channel f61, a pipe for which is provided with a non-sliding valve b6. The non-sliding valve b6 is configured to open and close the second discharge channel f61. The non-sliding valve b6 is present between the heat exchanger 21 and the second filter 24. The second discharge channel f61 is present between the second reaction vessel 23 and the second filter 24, which is configured to remove metallurgical grade silicon powder. The second discharge channel f61 is part of the channel through which metallurgical grade silicon powder flows in the trichlorosilane production system. The non-sliding valve b6 may alternatively be present between the second reaction vessel 23 and the heat exchanger 21.

The above arrangement can reduce damage caused to the valve seats by metallurgical grade silicon powder becoming trapped when the non-sliding valve b6 is closed on the second discharge channel f61, through which metallurgical grade silicon powder discharged from the second reaction vessel 23 flows. This allows the non-sliding valve b6 to be replaced less frequently, thereby allowing the replacement of the non-sliding valve b6 to be less expensive.

The second discharge channel f6 includes a second discharge channel f62, through which metallurgical grade silicon powder removed with use of the second filter 24 flows. A pipe for the second discharge channel f62 is provided with a non-sliding valve b7. The non-sliding valve b7 is configured to open and close the second discharge channel f62. The second discharge channel f62 is present between the second filter 24 and the second container tank 25. The second discharge channel f62 is part of the channel through which metallurgical grade silicon powder flows in the trichlorosilane production system.

The above arrangement can reduce damage caused to the valve seats by metallurgical grade silicon powder becoming trapped when the non-sliding valve b7 is closed on the second discharge channel f62, through which metallurgical grade silicon powder flows. This allows the non-sliding valve b7 to be replaced less frequently, thereby allowing the replacement of the non-sliding valve b7 to be less expensive.

Metallurgical grade silicon powder taken out from a lower portion of the second reaction vessel 23 flows through a pipe for the second exit channel f8 which pipe is provided with a non-sliding valve b8. The non-sliding valve b8 is configured to open and close the second exit channel f8. The second exit channel f8 is present between the second reaction vessel 23 and the second container tank 25, which is configured to contain metallurgical grade silicon powder taken out from a lower portion of the second reaction vessel 23. The second exit channel f8 is part of the channel through which metallurgical grade silicon powder flows in the trichlorosilane production system.

The above arrangement can reduce damage caused to the valve seats by metallurgical grade silicon powder becoming trapped when the non-sliding valve b8 is closed on the second exit channel f8, through which metallurgical grade silicon powder taken out from a lower portion of the second reaction vessel 23 flows. This allows the non-sliding valve b8 to be replaced less frequently, thereby allowing the replacement of the non-sliding valve b8 to be less expensive.

The present invention is not limited to the embodiments, but can be altered by a skilled person in the art within the scope of the claims. The present invention also encompasses, in its technical scope, any embodiment derived by combining technical means disclosed in differing embodiments.

### (Recap)

A production method as an aspect of the present invention is a method for producing trichlorosilane includes opening and closing a channel with use of a non-sliding valve, the channel being a channel through which metallurgical grade silicon powder flows in a system for producing the trichlorosilane, the non-sliding valve including a valve body capable of being rotated without coming into contact with a valve seat.

With the above arrangement, the non-sliding valve includes a valve body capable of being rotated without coming into contact with a valve seat. This prevents the valve seats of the non-sliding valve from being damaged by metallurgical grade silicon powder, thereby preventing an internal leak. Further, since the non-sliding valve includes a valve body capable of being rotated without coming into contact with the valve seats, the non-sliding valve has an improved durability. This facilitates continuous production of trichlorosilane.

A production method as an aspect of the present invention may preferably further include causing the metallurgical grade silicon powder and hydrogen chloride gas to react with each other for production of the trichlorosilane.

The above arrangement can, in a case where metallurgical grade silicon powder and hydrogen chloride gas are caused to react with each other for production of trichlorosilane, prevent the valve seats of the non-sliding valve from being damaged by metallurgical grade silicon powder, thereby preventing an internal leak. Further, since the non-sliding valve includes a valve body capable of being rotated without coming into contact with the valve seats, the non-sliding valve has an improved durability. This facilitates continuous production of trichlorosilane.

A production method as an aspect of the present invention may preferably be arranged such that the channel includes an entry channel configured to guide the metallurgical grade silicon powder into a reaction vessel for causing the metallurgical grade silicon powder and the hydrogen chloride gas to react with each other for production of the trichlorosilane, and the entry channel is opened and closed with use of the non-sliding valve.

The above arrangement involves use of a non-sliding valve to open and close an entry channel, which is configured to guide metallurgical grade silicon powder into a reaction vessel. Metallurgical grade silicon powder has small particle diameters. Minimizing a sliding portion of a conventional valve will still let metallurgical grade silicon powder enter the sliding portion while the valve is sliding, causing a valve seat to be damaged by the metallurgical grade silicon powder. It is thus preferable to use a non-sliding valve, which has no sliding portion.

With the above arrangement, even in a case where the non-sliding valve is closed on an entry channel configured to guide metallurgical grade silicon powder into a reaction vessel, the valve seat of the non-sliding valve is not easily damaged by metallurgical grade silicon powder becoming trapped. This allows the non-sliding valve to be replaced less frequently, thereby allowing the replacement of the non-sliding valve to be less expensive.

A production method as an aspect of the present invention may preferably be arranged such that the channel includes an exit channel through which the metallurgical grade silicon powder taken out from a lower portion of a reaction vessel flows, the reaction vessel being a reaction vessel for causing the metallurgical grade silicon powder and the hydrogen chloride gas to react with each other for production of the trichlorosilane, the exit channel is present between the reaction vessel and a container tank configured to contain the metallurgical grade silicon powder taken out from the lower portion of the reaction vessel, and the exit channel is opened and closed with use of the non-sliding valve.

The above arrangement involves use of a non-sliding valve to open and close an exit channel through which metallurgical grade silicon powder taken out from a lower portion of a reaction vessel flows. With the above arrangement, even in a case where the non-sliding valve is closed on an exit channel through which metallurgical grade silicon powder taken out from a lower portion of a reaction vessel flows, the valve seat of the non-sliding valve is not easily damaged by metallurgical grade silicon powder becoming trapped. This allows the non-sliding valve to be replaced less frequently, thereby allowing the replacement of the non-sliding valve to be less expensive.

A production method as an aspect of the present invention may preferably be arranged such that the channel includes a discharge channel through which the metallurgical grade silicon powder discharged from an upper portion of a reaction vessel flows, the reaction vessel being a reaction vessel for causing the metallurgical grade silicon powder and the hydrogen chloride gas to react with each other for production of the trichlorosilane, the discharge channel is present between the reaction vessel and a filter configured to remove the metallurgical grade silicon powder, and the discharge channel is opened and closed with use of the non-sliding valve.

The above arrangement involves use of a non-sliding valve to open and close a discharge channel through which metallurgical grade silicon powder discharged from an upper portion of a reaction vessel flows. With the above arrangement, even in a case where the non-sliding valve is closed on a discharge channel through which metallurgical grade silicon powder discharged from an upper portion of a reaction vessel flows, the valve seat of the non-sliding valve is not easily damaged by metallurgical grade silicon powder becoming trapped. This allows the non-sliding valve to be replaced less frequently, thereby allowing the replacement of the non-sliding valve to be less expensive.

A production method as an aspect of the present invention may preferably be arranged such that the channel includes a discharge channel through which the metallurgical grade silicon powder discharged from an upper portion of a reaction vessel flows, the reaction vessel being a reaction vessel for causing the metallurgical grade silicon powder and the hydrogen chloride gas to react with each other for production of the trichlorosilane, the discharge channel is present between (i) a filter configured to remove the metallurgical grade silicon powder and (ii) a container tank configured to contain the metallurgical grade silicon powder having been removed with use of the filter, and the discharge channel is opened and closed with use of the non-sliding valve.

The above arrangement involves use of a non-sliding valve to open and close a discharge channel present between (i) a filter configured to remove metallurgical grade silicon powder and (ii) a container tank configured to contain metallurgical grade silicon powder having been removed with use of the filter. With the above arrangement, even in a case where the non-sliding valve is closed on a discharge channel which is present between a filter and a container tank and through which metallurgical grade silicon powder flows, the valve seat of the non-sliding valve is not easily damaged by metallurgical grade silicon powder becoming trapped. This allows the non-sliding valve to be replaced less frequently, thereby allowing the replacement of the non-sliding valve to be less expensive.

A production apparatus as an aspect of the present invention is an apparatus for producing trichlorosilane, the apparatus including: a pipe configured to allow metallurgical grade silicon powder to flow therethrough; and a non-sliding valve including a valve body capable of being rotated without coming into contact with a valve seat, the non-sliding valve being (i) provided for the pipe in a system for producing the trichlorosilane and (ii) configured to open and close a channel of the pipe.

With the above arrangement, the non-sliding valve includes a valve body capable of being rotated without coming into contact with a valve seat. This prevents the valve seats of the non-sliding valve from being damaged by metallurgical grade silicon powder, thereby preventing an internal leak. Further, since the non-sliding valve includes a valve body capable of being rotated without coming into contact with the valve seats, the non-sliding valve has an improved durability. This facilitates continuous production of trichlorosilane.

A production apparatus as an aspect of the present invention may preferably be arranged such that the non-sliding valve is structured such that the valve body and the valve seat metal-touch each other.

With the above arrangement, the non-sliding valve is structured such that the valve body and the valve seat metal-touch each other. This allows the non-sliding valve to have a heat-resistant temperature exceeding 200°C and be used at a temperature exceeding 200°C.

### Industrial Applicability

The present invention is applicable to production of trichlorosilane.

### Reference Signs List

- 1: Production apparatus
- 2, 11: Compressor
- 3: Reaction vessel
- 10: Condenser
- 5: Filter
- 6: Container tank
- 8: Heat medium drum
- 4, 7, 9: Cooler
- 13: Distillation column
- 15: Heat medium pipe
- 21: Heat exchanger
- 22: Heater
- 23: Second reaction vessel
- 24: Second filter
- 25: Second container tank
- 31, 32: Stem
- 33: Valve body
- 34: Pipe
- 35, 36: Valve seat
- 37: Opening section
- 38: Entry section
- 39: Exit section
- 40: Body section
- b1 to b8: Non-sliding valve
- f1: Entry channel
- f2: Exit channel
- f3, f31, f32: Discharge channel
- f5: Second entry channel
- f6, f61, f62: Second discharge channel
- f8: Second exit channel

## Claims

1. A method for producing trichlorosilane, the method comprising:
opening and closing a channel with use of a non-sliding valve, the channel being a channel through which metallurgical grade silicon powder flows in a system for producing the trichlorosilane, the non-sliding valve including a valve body capable of being rotated without coming into contact with a valve seat.

2. The method according to claim 1, further comprising:
causing the metallurgical grade silicon powder and hydrogen chloride gas to react with each other for production of the trichlorosilane.

3. The method according to claim 2, wherein
the channel includes an entry channel configured to guide the metallurgical grade silicon powder into a reaction vessel for causing the metallurgical grade silicon powder and the hydrogen chloride gas to react with each other for production of the trichlorosilane, and
the entry channel is opened and closed with use of the non-sliding valve.

4. The method according to claim 2 or 3, wherein
the channel includes an exit channel through which the metallurgical grade silicon powder taken out from a lower portion of a reaction vessel flows, the reaction vessel being a reaction vessel for causing the metallurgical grade silicon powder and the hydrogen chloride gas to react with each other for production of the trichlorosilane, the exit channel is present between the reaction vessel and a container tank configured to contain the metallurgical grade silicon powder taken out from the lower portion of the reaction vessel, and
the exit channel is opened and closed with use of the non-sliding valve.

5. The method according to any one of claims 2 to 4, wherein
the channel includes a discharge channel through which the metallurgical grade silicon powder discharged from an upper portion of a reaction vessel flows, the reaction vessel being a reaction vessel for causing the metallurgical grade silicon powder and the hydrogen chloride gas to react with each other for production of the trichlorosilane,
the discharge channel is present between the reaction vessel and a filter configured to remove the metallurgical grade silicon powder, and
the discharge channel is opened and closed with use of the non-sliding valve.

6. The method according to any one of claims 2 to 4, wherein
the channel includes a discharge channel through which the metallurgical grade silicon powder discharged from an upper portion of a reaction vessel flows, the reaction vessel being a reaction vessel for causing the metallurgical grade silicon powder and the hydrogen chloride gas to react with each other for production of the trichlorosilane,
the discharge channel is present between (i) a filter configured to remove the metallurgical grade silicon powder and (ii) a container tank configured to contain the metallurgical grade silicon powder having been removed with use of the filter, and the discharge channel is opened and closed with use of the non-sliding valve.

7. An apparatus for producing trichlorosilane, the apparatus comprising:
a pipe channel configured to allow metallurgical grade silicon powder to flow therethrough; and
a non-sliding valve including a valve body capable of being rotated without coming into contact with a valve seat,
the non-sliding valve being (i) provided for the channel in a system for producing the trichlorosilane and (ii) configured to open and close-the channel.

8. The apparatus according to claim 7, wherein
the non-sliding valve is structured such that the valve body and the valve seat metal-touch each other.

## Patentansprüche

1. Verfahren zur Herstellung von Trichlorsilan, wobei das Verfahren Folgendes aufweist:
Öffnen und Schließen eines Kanals unter Verwendung eines nicht gleitenden Ventils, wobei der Kanal ein Kanal ist, durch den Silicium-Pulver metallurgischer Qualität fließt in einem System zur Herstellung des Trichlorsilans, wobei das nicht gleitende Ventil einen Ventilkörper aufweist, der in der Lage ist, gedreht zu werden, ohne mit einem Ventilsitz in Kontakt zu gelangen.

2. Verfahren nach Anspruch 1, ferner aufweisend:
Bewirken, dass das Silicium-Pulver metallurgischer Qualität und Chlorwasserstoffgas zur Herstellung des Trichlorsilans miteinander reagieren.

3. Verfahren nach Anspruch 2, wobei
der Kanal einen Eintrittskanal aufweist, der dafür ausgelegt ist, um das Silicium-Pulver metallurgischer Qualität in ein Reaktionsgefäß zu führen, um zu bewirken, dass das Silicium-Pulver metallurgischer Qualität und das Chlorwasserstoffgas zur Herstellung des Trichlorsilans miteinander reagieren, und
der Eintrittskanal unter Verwendung des nicht gleitenden Ventils geöffnet und geschlossen wird.

4. Verfahren nach Anspruch 2 oder 3, wobei
der Kanal einen Austrittskanal aufweist, durch den das Silicium-Pulver metallurgischer Qualität, das aus einem unteren Abschnitt eines Reaktionsgefäßes entnommen wird, strömt, wobei das Reaktionsgefäß ein Reaktionsgefäß ist, um zu bewirken, dass das Silicium-Pulver metallurgischer Qualität und das Chlorwasserstoffgas zur Herstellung des Trichlorsilans miteinander reagieren,
der Austrittskanal zwischen dem Reaktionsgefäß und einem Behältertank vorhanden ist, der dafür ausgelegt ist, um das Silicium-Pulver metallurgischer Qualität, das aus dem unteren Abschnitt des Reaktionsgefäßes entnommen wird, zu enthalten, und
der Austrittskanal unter Verwendung des nicht gleitenden Ventils geöffnet und geschlossen wird.

5. Verfahren nach einem der Ansprüche 2 bis 4, wobei
der Kanal einen Abgabekanal aufweist, durch den das Silicium-Pulver metallurgischer Qualität, das aus einem oberen Abschnitt eines Reaktionsgefäßes abgegeben wird, strömt, wobei das Reaktionsgefäß ein Reaktionsgefäß ist, um zu bewirken, dass das Silicium-Pulver metallurgischer Qualität und das Chlorwasserstoffgas zur Herstellung des Trichlorsilans miteinander reagieren,
der Abgabekanal zwischen dem Reaktionsgefäß und einem Filter vorhanden ist, der dafür ausgelegt ist, um das Silicium-Pulver metallurgischer Qualität zu entfernen, und der Abgabekanal unter Verwendung des nicht gleitenden Ventils geöffnet und geschlossen wird.

6. Verfahren nach einem der Ansprüche 2 bis 4, wobei
der Kanal einen Abgabekanal aufweist, durch den das Silicium-Pulver metallurgischer Qualität, das aus einem oberen Abschnitt eines Reaktionsgefäßes abgegeben wird, strömt, wobei das Reaktionsgefäß ein Reaktionsgefäß ist, um zu bewirken, dass das Silicium-Pulver metallurgischer Qualität und das Chlorwasserstoffgas zur Herstellung des Trichlorsilans miteinander reagieren,
der Abgabekanal vorhanden ist zwischen (i) einem Filter, der dafür ausgelegt ist, um das Silicium-Pulver metallurgischer Qualität zu entfernen, und (ii) einem Behältertank, der dafür ausgelegt ist, um das Silicium-Pulver metallurgischer Qualität, das unter Verwendung des Filters entfernt wurde, zu enthalten, und
der Abgabekanal unter Verwendung des nicht gleitenden Ventils geöffnet und geschlossen wird.

7. Vorrichtung zur Herstellung von Trichlorsilan, wobei die Vorrichtung Folgendes aufweist:
einen Kanal, der dafür ausgelegt ist, um zu gestatten, dass Silicium-Pulver metallurgischer Qualität hindurchströmt; und
ein nicht gleitendes Ventil, das einen Ventilkörper aufweist, der in der Lage ist, gedreht zu werden, ohne mit einem Ventilsitz in Kontakt zu gelangen,
wobei das nicht gleitende Ventil (i) für den Kanal in einem System zur Herstellung des Trichlorsilans bereitgestellt ist, und (ii) dafür ausgelegt ist, um den Kanal zu öffnen und zu schließen.

8. Vorrichtung nach Anspruch 7, wobei
das nicht gleitende Ventil derart strukturiert ist, dass der Ventilkörper und der Ventilsitz einander Metall-berühren.

## Revendications

1. Procédé de production de trichlorosilane, le procédé comprenant :
l'ouverture et la fermeture d'un canal à l'aide d'une vanne non coulissante, le canal étant un canal à travers lequel circule de la poudre de silicium de qualité métallurgique dans un système de production de trichlorosilane, la vanne non coulissante comprenant un corps de vanne pouvant être mis en rotation sans entrer en contact avec un siège de vanne.

2. Procédé selon la revendication 1, consistant en outre à :
faire réagir la poudre de silicium de qualité métallurgique et un gaz de chlorure d'hydrogène pour la production du trichlorosilane.

3. Procédé selon la revendication 2, dans lequel
le canal comprend un canal d'entrée configuré pour guider la poudre de silicium de qualité métallurgique dans une cuve de réaction pour faire réagir la poudre de silicium de qualité métallurgique et le gaz de chlorure d'hydrogène l'un avec l'autre pour la production du trichlorosilane, et
le canal d'entrée est ouvert et fermé à l'aide de la vanne non coulissante.

4. Procédé selon la revendication 2 ou la revendication 3, dans lequel le canal comprend un canal de sortie à travers lequel s'écoule la poudre de silicium de qualité métallurgique prélevée dans une partie inférieure d'une cuve de réaction, la cuve de réaction étant une cuve de réaction destinée à faire réagir la poudre de silicium de qualité métallurgique et le gaz de chlorure d'hydrogène l'un avec l'autre pour la production du trichlorosilane,
le canal de sortie est présent entre la cuve de réaction et un réservoir conteneur configuré pour contenir la poudre de silicium de qualité métallurgique prélevée dans la partie inférieure de la cuve de réaction, et
le canal de sortie est ouvert et fermé à l'aide de la vanne non coulissante.

5. Procédé selon l'une des revendications 2 à 4, dans lequel le canal comprend un canal de décharge à travers lequel s'écoule la poudre de silicium de qualité métallurgique déchargée d'une partie supérieure d'une cuve de réaction, la cuve de réaction étant une cuve de réaction destinée à faire réagir la poudre de silicium de qualité métallurgique et le gaz de chlorure d'hydrogène l'un avec l'autre pour la production du trichlorosilane,
le canal de décharge est présent entre la cuve de réaction et un filtre configuré pour éliminer la poudre de silicium de qualité métallurgique, et
le canal de décharge est ouvert et fermé à l'aide de la vanne non coulissante.

6. Procédé selon l'une quelconque des revendications 2 à 4, dans lequel le canal comprend un canal de décharge à travers lequel s'écoule la poudre de silicium de qualité métallurgique déchargée d'une partie supérieure d'une cuve de réaction, la cuve de réaction étant une cuve de réaction destinée à faire réagir la poudre de silicium de qualité métallurgique et le gaz de chlorure d'hydrogène l'un avec l'autre pour la production du trichlorosilane,
le canal de décharge est présent entre (i) un filtre configuré pour éliminer la poudre de silicium de qualité métallurgique et (ii) un réservoir conteneur configuré pour contenir la poudre de silicium de qualité métallurgique qui a été éliminée à l'aide du filtre, et le canal de décharge est ouvert et fermé à l'aide de la vanne non coulissante.

7. Appareil pour la production de trichlorosilane, comprenant :
un canal configuré pour permettre à la poudre de silicium de qualité métallurgique de s'écouler à travers celui-ci ; et
une vanne non coulissante comprenant un corps de vanne capable de tourner sans entrer en contact avec un siège de vanne,
la vanne non coulissante étant (i) prévue pour le canal dans un système pour la production du trichlorosilane et (ii) configurée pour ouvrir et fermer le canal.

8. Appareil selon la revendication 7, dans lequel
la vanne non coulissante est structurée de telle sorte que le corps de vanne et le siège de vanne se touchent métalliquement l'un l'autre.
